Europäisches Patentamt

European Patent Office

Office européen des brevets

(11) Veröffentlichungsnummer : **0 494 990 B1**

(19)

(12) **EUROPÄISCHE PATENTSCHRIFT**

(45) Veröffentlichungstag der Patentschrift :
**04.08.93 Patentblatt 93/31**

(51) Int. Cl.⁵ : **H04B 1/66**

(21) Anmeldenummer : **90916283.6**

(22) Anmeldetag : **08.10.90**

(86) Internationale Anmeldenummer :
**PCT/EP90/01683**

(87) Internationale Veröffentlichungsnummer :
**WO 91/05412 18.04.91 Gazette 91/09**

(54) **VERFAHREN ZUR ÜBERTRAGUNG EINES SIGNALS.**

(30) Priorität : **06.10.89 DE 3933339**
**06.10.89 DE 3933853**

(43) Veröffentlichungstag der Anmeldung :
**22.07.92 Patentblatt 92/30**

(45) Bekanntmachung des Hinweises auf die
Patenterteilung :
**04.08.93 Patentblatt 93/31**

(84) Benannte Vertragsstaaten :
**AT BE CH DE DK ES FR GB IT LI LU NL SE**

(56) Entgegenhaltungen :
**EP-A- 0 193 143**
**EP-A- 0 251 028**
**EP-A- 0 386 418**
**WO-A-83/03935**
**WO-A-89/03140**
**DE-C- 3 328 344**
**DE-C- 3 424 813**

(56) Entgegenhaltungen :
**IEEE International Conference on Acoustics,
Speech, and Signal Processing 1987, 6-9 April
1987 (Registry Hotel, Dallas, Texas); J.P. Princen, A.W. Johnson and A.B. Bradley:
"Subband/Transform Coding Using Filter
Bank Designs Based on Time Domain Aliasing
Cancellation", pages 2161-2164
IEEE Transactions on Acoustics, Speech and
Signal Processing, vol. ASSP-34, 5 October
1986; J.P. Princen and A.B. Bradley:
"Analysis/Synthesis Filter Bank Design Based
on Time Domain Aliasing Cancellation", pages 1153-1161**

(73) Patentinhaber : **TELEFUNKEN Fernseh und
Rundfunk GmbH
Göttinger Chaussee 76
W-3000 Hannover 91 (DE)**

(72) Erfinder : **VAUPEL, Thomas
Leggewiestr. 23
W-4300 Essen (DE)**
Erfinder : **KRAHE, Detlef
Michelsheide 13
W-4152 Kempen 3 (DE)**
Erfinder : **DICKOPP, Gerhard
Buschstr. 208
W-4150 Krefeld-Bockum (DE)**

(74) Vertreter : **Einsel, Robert, Dipl.-Ing.
TELEFUNKEN Fernseh und Rundfunk GmbH
Patent- und Lizenzabteilung Göttinger
Chaussee 76
W-3000 Hannover 91 (DE)**

EP 0 494 990 B1

## Beschreibung

Die Erfindung betrifft ein Verfahren zur Übertragung eines Signals nach dem Oberbegriff des Anspruchs 1.

Bei der Übertragung eines Audiosignals, z.B. bei der Rundfunkübertragung, Kabelübertragung, Satellitenübertragung und bei Aufzeichnungsgeräten ist es bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen breitbandigen Kanal möglichst viele Audiosignale gleichzeitig übertragen zu können. Die erforderliche Bandbreite läßt sich ansich verringern durch eine Reduzierung der Abtastwerte oder der Anzahl der Bits pro Abtastwert. Diese Maßnahme hat aber in der Regel eine Verschlechterung der Wiedergabequalität zur Folge.

Bei einem aus der DE-OS 35 06 912 bekannten Verfahren wird zur Verbesserung der Wiedergabequalität das digitale Audiosignal in zeitlich aufeinanderfolgende Abschnitte zerlegt und in ein Kurzzeitspektrum transformiert, welches jeweils für die Zeitabschnitte die Spektralkomponenten des Signals darstellt. In dem Kurzzeitspektrum lassen sich auf Grund psychoakustischer Gesetzmäßigkeit im allgemeinen Komponenten, die vom Hörer nicht wahrgenommen werden, also im nachrichtentechnischen Sinne irrelevant sind, besser auffinden, als im Zeitbereich. Diese Komponenten werden bei der Übertragung weniger gewichtet oder ganz weggelassen. Hierdurch kann bei der Übertragung ein beträchtlicher Teil der sonst notwendigen Daten entfallen, so daß die mittlere Bitrate wesentlich verringert werden kann.

Für die Bildung der Zeitabschnitte wird das Signal zunächst im Zeitbereich mit einem Analysefenster bewertet und nach der Transformation, Codierung, Übertragung, Decodierung und Rücktransformation abschließend mit einem Synthesefenster bewertet. Die Ausgestaltung des Analysefensters beeinflußt die Frequenzauflösung. Der Vorteil einer hohen Frequenzauflösung besteht darin, daß bei schmalbandigen Signalkomponenten nur wenige Daten zu ihrer Codierung benötigt werden, wodurch eine sehr effektive Bitzuweisung erzielt und die bei der Übertragung anfallende durchschnittliche Datenmenge erheblich verringert wird.

So ist bei Fenstern mit "harten" Flanken, wie sie z.B. ein Rechteckfenster aufweist, die Frequenzauflösung schlecht. Dem Spektrum des ursprünglichen Signals werden nämlich im bewerteten Abschnitt zusätzlich die durch den extrem Signalanstieg und -abfall am Anfang und Ende des Fensters verursachten Spektralanteile zugefügt. Allerdings könnten die Zeitabschnitte überlappungsfrei aneinander gefügt werden.

Bei dem in der DE-OS 35 06 912 beschriebenen Verfahren wurde bereits eine Fensterfunktion mit "weicheren" Flanken gewählt. Hier folgt der Anfang und das Ende des Analysefensters einer Kosinusquadratfunktion und die entsprechenden Bereiche des Synthesefensters einer Sinusquadratfunktion. Der mittlere Bereich beider Fenster weist einen konstanten Wert auf. Durch eine derartige Ausgestaltung der Fensterfunktion ergibt sich bereits eine verbesserte Frequenzauflösung. Im Bereich der "weichen" Flanken ist jedoch eine Überlappung der aufeinanderfolgenden Zeitabschnitte erforderlich, die durch die doppelte Übertragung der in diesem Bereich enthaltenen Signale zu einer Erhöhung der mittleren Bitrate führt.

Eine weitere Verbesserung der Frequenzauflösung ließe sich durch eine noch geringere Flankensteilheit der Fensterfunktion des Analysefensters sowie durch eine Ausdehnung des Flankenbereichs innerhalb des Fensters erzielen. Bei dieser Maßnahme ist jedoch zwangsläufig eine größere Überlappung benachbarter Zeitabschnitte erforderlich.

Wird der Flankenbereich soweit ausgedehnt, daß die Fensterfunktionen in keinen Bereich mehr einen konstanten Wert aufweist, so müssen sich benachbarte Zeitabschnitte um 50% überlappen. Dadurch wird die Zahl der Abtastwerte und dementsprechend die Datenmenge verdoppelt.

Aus den Veröffentlichung J.P. Princen and A.B. Bradley, "Analysis/Synthesis Filter Bank Design Based on Time Domain Aliasing Cancellation", IEEE Transactions, ASSP-34, No. 5, Oct. 1986, pp. 1153-1161; und J.P. Princen, A.W. Johnson and A.B. Bradley, "Subband/Transform Coding Using Filter Bank Design Based on Time Domain Aliasing Cancellation", IEEE Int. Conference on Acoustics, Speech and Signal Processing 1987, S. 2161-2164, ist es bekannt, bei einer 50%-igen Überlappung aufeinanderfolgender Zeitabschnitte die Datenmenge wieder auf den ursprünglichen Wert zu reduzieren, indem nur jeder zweite Abtastwert codiert wird. Dieser Vorschlag geht von gleichen Fensterfunktionen beim Analyse- und Synthesefenster aus. Die bei der Unterabtastung auftretenden Aliaskomponenten lassen sich bei gleichen Fensterfunktionen nach der Bewertung mit dem Synthesefenster kompensieren.

Es wurde herausgefunden, daß sich die Frequenzauflösung durch Wahl größerer Überlappungsbereiche steigern läßt, wenn das Signal gleichzeitig mit geeigneten Analyse- und Synthesefenstern bewertet wird. Um die durch die höhere Anzahl der Abtastwerte steigende Datenrate wieder auf den ursprünglichen Wert zu reduzieren, müßte die Unterabtastung mit einem noch höheren Faktor erfolgen, wodurch jedoch weitere Aliaskomponenten entstehen.

Der Erfindung liegt die Aufgabe zugrunde, für ein Verfahren zur Übertragung eines Signals eine allgemeingültige Maßnahmen anzugeben, die auch bei mehrfach überlappenden Blöcken eine Reduzierung der Abtastwerte und damit der Datenrate bei gleichzeitiger Kompensation der Aliaskomponenten ermöglichen.

Diese Aufgabe wird durch das im Anspruch 1 angegebenen Verfahren gelöst.

Das Verfahren ermöglicht es, für Überlappungen, die einer Zweierpotenz entsprechen, also für eine Zweifach-, Vierfach-, Achtfach-Überlappung usw., die allgemeinen Bedingungen für die Transformationen anzugeben und bei der praktischen Ausgestaltung zu nutzen. Weiterbildungen des Verfahrens sehen vor, auch die allgemeinen Bedingungen für unterschiedliche Analyse- und Synthesefenster zu bestimmen und für einen praktischen Einsatz anzuwenden.

Durch Anwendung der erfindungsgemäßen Verfahrensschritte gelingt es, die mit zunehmender Überlappung besser werdenden Analyseeigenschaften von weicheren Analysefensterfunktionen auszunutzen. Durch entsprechende Unterabtastung im Frequenzbereich wird der Aufwand durch Mehrfach-Übertragung von Fensterteilbereichen auf die ursprüngliche Datenrate des Zeitsignals reduziert.

Weiterbildungen und vorteilhafte Ausgestaltungen der Erfindung ergeben sich aus den Ansprüchen, der weiteren Beschreibung und der Zeichnung. Nachfolgend wird die Erfindung erläutert.

In der Zeichnung zeigen:

Fig. 1    ein Flußdiagramm mit den wesentlichen Verfahrensschritten der Erfindung,

Fig. 2    eine grafische Darstellung der Segmentierung des kontinuierlichen Zeitsignals,

Fig. 3    eine Blockbildung aus dem segmentierten Originalsignal,

Fig. 4    einen geraden und ungeraden Blocksignalanteil,

Fig. 5    einen periodisierten geraden Blocksignalanteil,

Fig. 6    eine Unterabtastung im Spektrum um den Faktor 2 und Versatz zum Koordinatenursprung-von TB/2 im Zeitbereich bei Kosinustransformation,

Fig. 7    eine Unterabtastung im Spektrum um den Faktor 2 und Versatz zum Koordinatenursprung von TB/4 im Zeitbereich bei Kosinustransformation,

Fig. 8    Signalkomponenten bei überlappender Summation für verschiedene Versätze des Blockanfangs zum Koordinatenursprung,

Fig. 9    eine Unterabtastung im Spektrum um den Faktor 2, Versatz zum Koordinatenursprung von TB/4 im Zeitbereich und Versatz um eine halbe Abtastperiode bei der Abtastung im Frequenzbereich-bei Kosinustransformation,

Fig. 10    Signalkomponenten nach Transformation, Unterabtastung, Übertragung und inverser Transformation für verschiedene Transformationen,

Fig. 11    eine Signalrekonstruktion bei 50% Überlappung,

Fig. 12    eine Segmentierung von Analyse- und Synthesefenster,

Fig. 13    Komponenten des Analyse- und Synthesefenster im jeweiligen Blockbereich,

Fig. 14    Signalkomponenten nach Transformation, Unterabtastung, Übertragung und inverser Transformation im Synthesefensterbereich für verschiedene Transformationen bei vierfach Blocküberlappung,

Fig. 15    eine Aliaskompensation mit Rechteckfenster zu Analyse- und Synthese,

Fig. 16    ein Kompensationsschema für die alternierende Anwendung von Sinus- und Kosinustransformation,

Fig. 17    eine Zweifach-Überlappung im Zeitbereich,

Fig. 18    eine Vierfach-Überlappung im Zeitbereich,

Fig. 19    eine Achtfach-Überlappung im Zeitbereich,

Fig. 20    eine Zweifach-Überlappung im Frequenzbereich,

Fig. 21    eine Vierfach-Überlappung im Frequenzbereich,

Fig. 22    eine Achtfach-Überlappung im Frequenzbereich.

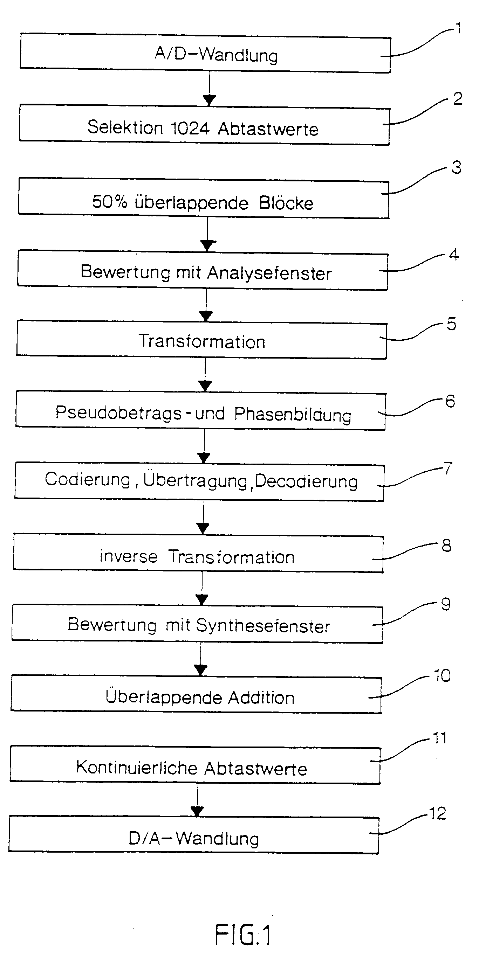

In dem in Fig. 1 dargestellten Flußdiagramm sind die einzelnen Verfahrensschritte zur Durchführung des Verfahrens der Erfindung dargestellt.

Die Ausgangsgröße des Verfahrens bildet ein analoges Audiosignal, das gemäß Verfahrensschritt 1 in ein digitales Signal umgewandelt wird, in dem Amplitudenwerte als Abtastwerte digital codiert vorliegen.

Im Verfahrensschritt 2 wird das kontinuierliche Signal gefenstert, indem eine Reihe aufeinanderfolgender Abtastwerte, im vorliegenden Fall 1024 Abtastwerte, selektiert werden.

Im Verfahrensschritt 3 werden aus den selektierten Abtastwerten Blöcke gebildet, die sich zeitlich um 50% überlappen. Das bedeutet, daß in benachbarten Blöcken teilweise dieselben Abtastwerte vorhanden sind, allerdings an unterschiedlichen Stellen. So entsprechen die in der ersten Hälfte eines aktuellen Blockes vorhandenen Abtastwerte den in der zweiten Hälfte des vorhergehenden Blockes vorhandenen Abtastwerte.

Im Verfahrensschritt 4 werden die in den Blöcken enthaltenen Signalabschnitte mit Analysefenstern bewertet. Hierdurch wird ein weicher Signaleinsatz und -auslauf an den Blockgrenzen erzeugt, der die Analyseschärfe bei der nachfolgenden Transformation erhöht.

Der Verfahrensschritt 5 bildet die Transformation des bislang zeitdiskreten Signals in ein frequenzdiskretes Signal Anstelle von Amplitudenwerte treten nunmehr Spektralwerte auf, die jeweils einen Real- und Imaginärteil umfassen.

Anschließend erfolgt im Verfahrensschritt 6 eine Umwandlung der Spektralwerte in eine Darstellung mit Psydobeträgen- und -phasen. Die Spektralwerte sind dann für ein Übertragungsverfahren aufbereitet und geeignet, wie es in der DE-OS 35 06 912 beschriebenen ist. Im Zusammenhang mit der Umwandlung der Spektralwerte wird auch gleichzeitig eine Unterabtastung durchgeführt. Im Ergebnis stimmt dann die Anzahl der zu übertragenden Werte wieder mit der Anzahl der ursprünglichen Abtastwerte überein. Die durch die 50%ige Überlappung der Blöcke verursachte Verdoppelung der Daten ist also hier wieder rückgängig gemacht worden.

Im mit 7 bezeichneten Verfahrensschritt sind mehrere Einzelschritte zusammengefaßt, welche die Codierung, gegebenenfalls Datenreduktion, Übertragung und Decodierung umfassen. Diese Verfahrensschritte können entsprechend dem in der DE-OS 35 06 912 Verfahren durchgeführt werden.

Im Verfahrensschritt 8 erfolgt nun eine zu dem Verfahrensschritt 5 inverse Transformation, der jedoch bei vorangegangener Datenreduktion ein verändertes, von psychoakustisch redundanten Bestandteilen befreites Signal unterzogen wird. Das Ergebnis der inversen Transformation sind wieder zeitdiskrete Signale in Form von Signalabschnitten eines kontinuierlichen Signals darstellenden Blöcken. In den Blökken sind aber nur noch die Hälfte der ursprünglichen Abtastwerte vorhanden.

Im anschließenden Verfahrensschritt 9 wird eine Wichtung der Blöcke mit Synthesefenstern vorgenommen. Die Synthesefensterfunktionen sind so ausgestaltet, daß sie die Signalverzerrungen, die durch Wichtung mit den Analysefenstern im Verfahrensschritt 4 entstanden sind, wieder ausgleichen. Die hier verwendeten Synthesefensterfunktionen erfüllen zwei Kriterien. Zum einen ergänzen sie sich im Überlappungsbereich mit den entsprechenden Analysefenstern zu Eins. Zum anderen ist das in der Mitte des Überlappungsbereichs gespiegelte Analysefenster multipliziert mit dem Synthesefenster für den Block n in der Differenz mit dem in der Mitte des Überlappungsbereich gespiegelte Analysefenster multipliziert mit dem Synthesefenster für den Block n+1 im Überlappungsbereich identisch Null. Dieses letztere Kriterium beeinhaltet die Kompensation der Aliaskomponenten.

Im Verfahrensschritt 10 werden die sich 50% überlappenden Blöcke addiert, wobei die Aliaskomponenten in den beiden zu überlagernden Blöcken jeweils mit umgekehrtem Vorzeichen auftritt, so daß er sich bei Addition zu Null kompensiert.

Der Verfahrensschritt 11 stellt die Bildung kontinuierlicher Abtastwerte durch Aneinanderfügen der Blöcke mit den gefensterten Signalabschnitten dar.

Schließlich wird im letzten, mit 12 bezeichneten Verfahrens-schritt eine Umwandlung der digital codierten Abtastwerte in ein analoges Signal vorgenommen, dem zwar objektiv Anteile fehlen, das aber subjektiv als mit dem ursprünglichen Signal identisch empfunden wird.

In der weiteren Erläuterung soll die Kosinus- bzw. die Sinustransformation als Grundlage der mehrfach überlappenden Transformationen dienen. Weiterhin soll für alle Verfahrenbeschreibungen von zeitkontinuierlichen Signalen ausgegangen werden. Der Übergang zu zeitdiskreten Signalen kann von den weiteren Betrachtungen getrennt nach der allgemein bekannten Vorgehensweise vorgenommen werden.

Die Kosinustransformation ist als Integraltransformation über folgendes Gleichungspaar definiert:

$$Fc(f) = Ac \int_0^\infty f(t) \cos(2 \pi ft) \, dt \qquad (1)$$

$$f(t) = Bc \int_{\overline{0}}^{\infty} F(f) \cos(2 \pi ft) \, df \qquad (2)$$

Entsprechend gilt für die Sinustransformation:

$$Fs(f) = As \int_{\overline{0}}^{\infty} f(t) \sin(2 \pi ft) \, dt \qquad (3)$$

$$f(t) = Bs \int_{\overline{0}}^{\infty} F(f) \sin(2 \pi ft) \, df \qquad (4)$$

Die Konstanten Ac, Bc, As und Bs dienen Normierungszwecken und sind für die weiteren Betrachtungen nicht von Belang. Entsprechend den Gleichungen (1) bis (4) sei die Zeitfunktion f(t) für die Kosinus- bzw. Sinustransformation nur für t>0 von Null verschieden. Für eine Transformation mit endlicher Blocklänge ist dies immer durch geeignete Wahl des Koordinatenursprungs zu erreichen.

Die Kosinus- und die Sinustransformation lassen sich auf die Fouriertransformation zurückführen, indem für die Kosinustransformation der gerade Signalanteil einer Fouriertransformation zugeführt wird, bzw. der ungerade Signalanteil für die Sinustransformation. Mit dieser Überführung lassen sich alle für die Fouriertransformation bekannten Theoreme auch für die Sinus- und Kosinustransformation nutzbar machen.

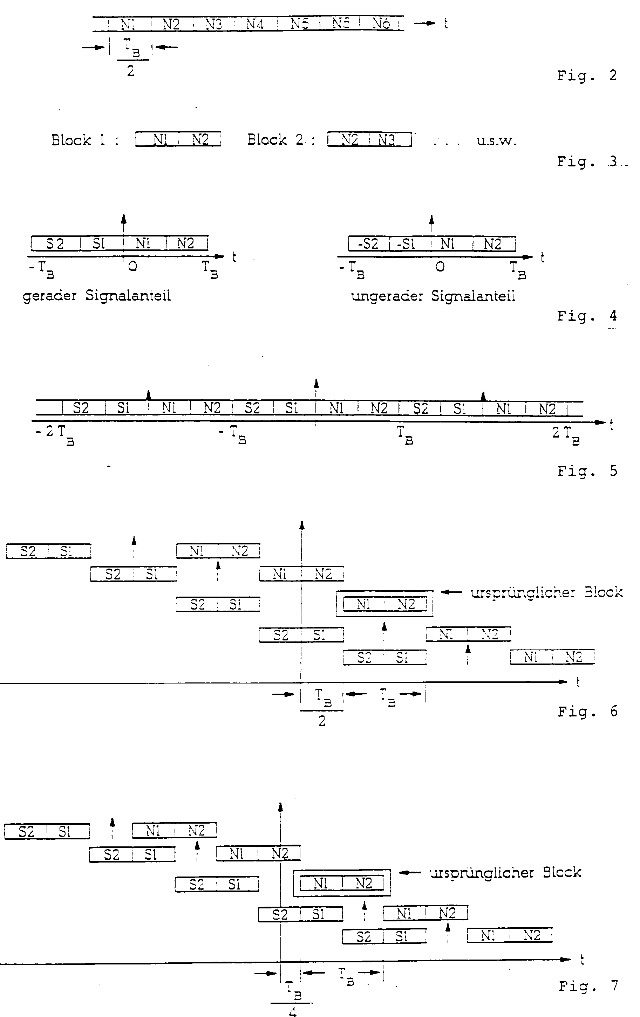

Das kontinuierliche Zeitsignal wird in Segmente unterteilt, die den Blockbereichen entsprechen, die nach Transformation, Unterabtastung, Übertragung und inverser Transformation der überlappenden Summation zugeführt werden. Bezeichnet man die Blocklänge mit TB, so haben die Segmente mit 50%-tiger Überlappung die Länge TB/2, wie es Fig. 2 zeigt. Mit Ni werden die Segmente in zeitlicher Reihenfolge bezeichnet.

Werden aus dem so beschriebenen kontinuierlichen Signal Blöcke mit 50% Überlappung mittels eines einfachen Rechteckfensters ausgeschnitten, so ergeben sich z. B. die aus Fig. 3 ersichtlichen Blöcke für einen Zyklus aus Transformation, Unterabtastung, Übertragung und inverser Transformation.

Wählt man den Koordinatenursprung so, daß er mit dem Anfang des Transformationsblockes zusammenfällt, so stellt sich der mit dem Faktor zwei multiplizierte gerade bzw. ungerade Signalanteil eines solchen Transformationsblockes in dieser Schematik wie in Fig. 4 gezeigt dar.

Mit Si werden hier die den Signalkomponenten Ni entsprechend gespiegelten Signalkomponenten bezeichnet. Das negative Vorzeichen gibt beim ungeraden Signalanteil an, daß die gespiegelten Signalkomponenten zu den entsprechenden Originalkomponenten negativ auftreten.

Die Abtastung der Fouriertransformierten des geraden bzw. des ungeraden Signalanteils führt im Zeitbereich zu einer Periodisierung der entsprechenden Signalkomponenten. Soll im Zeitbereich keine Aliasstörung entstehen, so dürfen sich die periodisierten Signalkomponenten gerade nicht überlappen. Dies bedeutet, im Spektrum muß im Grenzfall eine Abtastperiode von Fo= 1/(2TB) benutzt werden. Diese Periodisierung führt unter Zuhilfenahme des Schemas z.B. für die Kosinustransformation zu der in Fig. 5 gezeigten Darstellung.

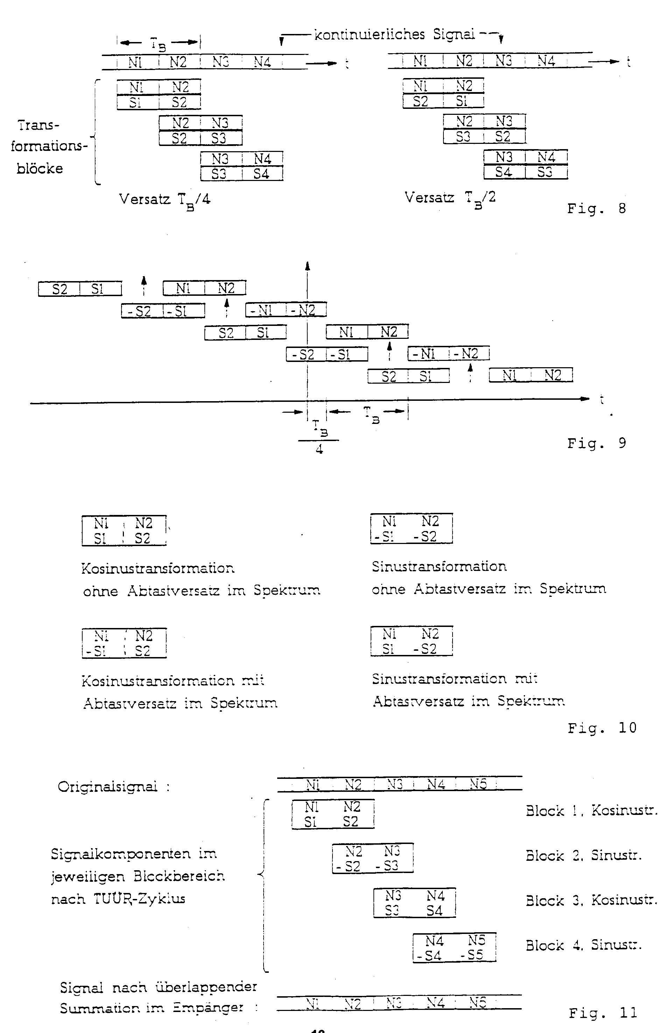

Ein Freiheitsgrad, der bisher relativ willkürlich festgelegt wurde, ist die Lage des Blockanfangs im verwendeten Koordinatensystem der Transformation. Bisher fielen der Blockanfang und der Nullpunkt des Koordinatensystems zusammen. Eine Verschiebung des Blockanfangs zu positiven Zeiten t im Koordinatensystem und die Konsequenzen einer Unterabtastung um den Faktor zwei im Spektrum, also eine Abtastperiode von Fo=1/TB, zeigen die Figuren 6 und 7 am Beispiel der Kosinustransformation. Dargestellt sind in Fig. 6 die verschiedenen Signalkomponenten im Zeitbereich nach Transformation, Unterabtastung, Übertragung und inverser Transformation bei einem Versatz des Transformationsblockes vom Koordinatenursprung von TB/2. Die Signalkomponenten bei einem Versatz von TB/4 zeigt Fig. 7.

An diesen beiden Beispielen läßt sich erkennen, welchen Einfluß dieser wichtige Freiheitsgrad auf die Komponenten hat, die sich in dem Bereich befinden, der mit dem Synthesefenster im Empfänger aus den sich periodisch wiederholenden Signalanteilen ausgeblendet wird. Dieser Zeitbereich hat in beiden Darstellungen die Dauer TB und die in den beiden Bildern gekennzeichnete Lage. Der Synthesefensterbereich enthält zum einen die Original-Signalsegmente N1 und N2 und zum anderen die Aliaskomponenten. Im Fall der Zweifach-Blocküberlappung die Komponenten S1 und S2. Die Figuren 6 und 7 zeigen, daß der Versatz des Blockanfangs zum Koordinatenursprung einerseits festlegt, an welcher Stelle im Blockbereich die durch Spiegelung entstandenen Signalkomponenten auftreten, andererseits aber keinen Einfluß auf Signalkomponenten mit nicht invertierter zeitlicher Lage hat.

Da die Methode der Aliaskompensation fordert, daß sich die Aliasanteile durch Summation der Blocküberlappungsbereiche der beteiligten Blöcke kompensieren, dürfen sich bei der Zweifach-Überlappung nur Signalanteile in einer Blockhälfte befinden, die aus dieser Blockhälfte des Originalsignals stammen. Diese Forderung wird von einem zeitlichen Versatz der Größe TB/2 nicht erfüllt, da hier gespiegelte Signalanteile aus der zweiten Blockhälfte in die erste Blockhälfte fallen und umgekehrt. In diesem Fall treten bei einer Blocküberlappung im Überlappungsbereich n Komponenten auf, die aus dem Überlappungsbereich n-1 sowie n+1 stammen. Da diese Komponenten im jeweiligen Überlappungsbereich nur einmal auftreten, können sie sich nicht kompensieren. Fig. 8 zeigt für aufeinanderfolgende Blöcke, welche Signalkomponenten bei den Versätze TB/2 und TB/4 grundsätzlich an der Summation im Überlappungsbereich beteiligt sind.

Da nur ein zeitlicher Versatz von TB/4 die grundsätzlich richtigen Komponenten enthält, damit nach einer Summation im Überlappungsbereich einerseits das Nutzsignal entsteht und andererseits sich die Aliaskomponenten kompensieren, wird dieser Versatz des Blockanfangs vom Koordinatenursprung für die Kosinusbzw. die Sinustransformation benutzt.

Einen weiteren Freiheitsgrad stellt das Abtastschema im Frequenzbereich dar. Hierbei ist es entweder möglich, die Abtastung bei der Frequenz f=0 beginnen zu lassen oder aber bei der Abtastung im Frequenzbereich einen Abtastversatz einzuführen, der der Hälfte der Abtastperiode entspricht. Andere Versatzgrößen führen durch eine unsymmetrische Abtastung der symmetrischen Bildfunktion der Kosinus- bzw. Sinustransformation im Fourierspektralraum zu einer Verdoppelung der Datenrate. Der Versatz um die Hälfte der Abtastperiode bei der Abtastung im Spektrum bewirkt nach Transformation, Unterabtastung, Übertragung und inverser Transformation im Zeitbereich einen alternierenden Vorzeichenwechsel bei der Periodisierung des geraden bzw. des ungeraden Blockanteils. Fig. 9 zeigt dies mit dem verwendeten Schema für die Kosinustransformation.

Aus den Figuren 7 und 9 kann entnommen werden, welche Signalkomponenten sich für die Kosinustransformation nach Transformation, Unterabtastung, Übertragung und inverser Transformation in dem Bereich befinden, der mit dem Synthesefenster ausgeblendet wird. Berücksichtigt man, daß bei der Sinustransformation nur die gespiegelten Komponenten ein negatives Vorzeichen gegenüber denen bei der Kosinustransformation haben, so kann man auch hierfür die Signalkomponenten im Synthesefensterbereich angeben. In Fig. 10 sind die Signalkomponenten, die sich nach Transformation, Unterabtastung, Übertragung und inverser Transformation im Synthesefensterbereich befinden, für die vier möglichen Transformationsvarianten Kosinustransformation mit und ohne Abtastversatz im Spektrum sowie Sinustransformation mit und ohne Abtastversatz im Spektrum angegeben.

In Fig. 11 wird nun der Mechanismus der Aliaskompensation für mehrere aufeinanderfolgende Blöcke gezeigt unter Verwendung eines Versatzes von TB/4. Von den möglichen Transformationsvarianten soll hier bei zeitlich aufeinanderfolgenden Blöcken abwechselnd Kosinus- und Sinustransformation ohne Abtastversatz im Frequenzbereich angewendet werden. Hierdurch erhalten die Aliaskomponenten einmal ein positives und einmal ein negatives Vorzeichen.

Im oben gezeigten Beispiel wurden Rechteckfenster als Analyse- und Synthesefensterfunktionen benutzt. Diese Fenster zeigen jedoch ein äußerst schlechtes Verhalten in Bezug auf Selektivität im Spektralbereich. Bessere Ergebnisse werden erzielt, wenn "weich" berandete Fensterfunktionen zur Analyse und Synthese verwendet werden.

Für die Verwendung von Fensterfunktionen, die von der Rechteckfensterfunktion abweichen, müssen zwei Bedingungen weiterhin beachtet werden:

1. das Nutzsignal muß durch die Überlagerung richtig rekonstruiert werden,
2. die Aliasstörung muß sich weiterhin kompensieren.

Um die Gleichungen aufstellen zu können, die für die Einhaltung der oben genannten zwei Bedingungen notwendig sind, soll ebenfalls ein Schema angewendet werden, das dem des bisher beschriebenen Schema entspricht und es ergänzt.

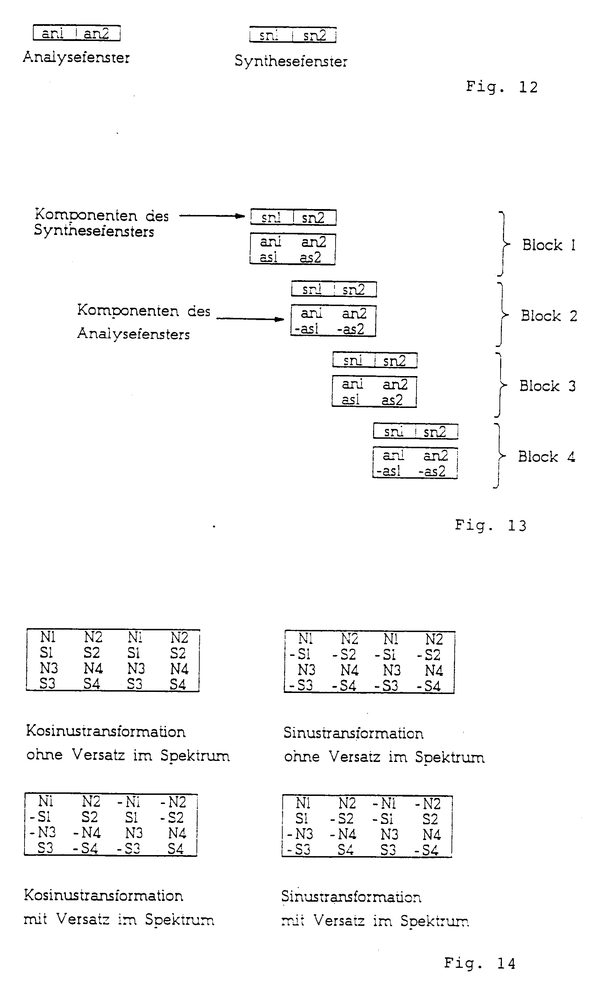

Segmentiert man das Analysefenster und das Synthesefenster in gleicher Weise wie das Signal, so ergibt sich eine Darstellung gemäß Fig. 12.

Entsprechend den Signalkomponenten werden jetzt die Komponenten des Analyse- bzw. des Synthesefensters, die in zeitlich regulärer Ausrichtung vorliegen, mit ani bzw sni bezeichnet. Komponenten des Analysefensters, die aufgrund der Spiegelung zeitlich invertiert sind, werden mit asi bezeichnet. Setzt man nun in Fig. 11 die Fenstersegmente ein, die an der Rekonstruktion der jeweiligen Signalkomponenten beteiligt waren, so ergibt sich eine Darstellung nach Fig. 13. Aus dieser Darstellung können unter Zuhilfenahme von Fig. 11 die Gleichungen abgelesen werden, die Analyse- und Synthesefensterfunktion einhalten müssen, damit nach der Summation im Überlappungsbereich einerseits das Signal selbst rekonstruiert wird und sich andererseits die Aliasstörungen kompensieren.

Aus Fig. 13 ergeben sich für die Blocküberlappungsbereiche zwei Gleichungen:

$$an1 * sn1 \; + \; an2 * sn2 \; = \; 1 \qquad (5) \qquad \text{(Rekonstruktionsvorschrift)}$$
$$- \, as1 * sn1 \; + \; as2 * sn2 \; = \; 0 \qquad (6) \qquad \text{(Kompensationsvorschrift)}$$

Verwendet man bei allen zeitlich aufeinanderfolgenden Transformationen identische Fensterfunktionen und bezeichnet man die Analysefensterfunktion mit a(x), wobei x eine normierte Zeit sein soll, die am Blockanfang den Wert 0 und am Blockende den Wert 1 besitzt, sowie die Synthesefensterfunktion mit s(x), so erhält man aus den Gleichungen (5) und (6) für den Überlappungsbereich $0 \leqq x \leqq 0{,}5$:

$$a(x) * s(x) \; + \; a(x + 0{,}5) * s(x + 0{,}5) \; = \; 1 \qquad (7)$$
$$a(0{,}5 - x) * s(x) \; - \; a(1 - x) * s(0{,}5 + x) \; = \; 0 \qquad (8)$$

Diese beiden Gleichungen müssen von den Fensterfunktionen erfüllt werden. Wählt man den Spezialfall, daß die Fensterfunktionen symmetrisch zur Blockmitte sind und nimmt an, daß die Analysefensterfunktion vorgegeben ist, so ergibt sich aus den Gleichungen (7) und (8) eine Konstruktionsvorschrift für die Synthesefensterfunktion:

$$s(x) \; = \; \frac{a(x)}{a^2(x) \; + \; a^2(x + 0{,}5)} \qquad (9)$$

Anschließend wird das am Beispiel der Zweifach-Überlappung erläuterte Verfahren auf größere Blocküberlappungen, nämlich die Vierfach- und Achtfach-Überlappung systematisch erweitert.

Die Freiheitsgrade, Verschiebung des Blocknullpunktes im zeitlichen Koordinatensystem und Versatz bei der Abtastung im Spektralbereich, werden gemäß den obigen Überlegungen festgelegt. Dies führt zu einer Verschiebung des Blocknullpunktes zum Koordinatenursprung um ein Achtel der Blocklänge TB. Der Versatz Null und die Verschiebung um eine halbe Abtastperiode bei der Abtastung im Spektrum sind auch in diesem Fall zulässig. Es ergeben sich also auch für die Vierfach-Blocküberlappung vier Transformationsmodifikationen. Die Signalkomponenten, die sich nach Transformation, Unterabtastung, Übertragung und inverser Transformation im Bereich des Synthesefensters befinden, zunächst unter Verwendung von Rechteckfensterfunktionen zur Analyse und Synthese, zeigt Fig. 14 für alle gültigen Transformationen. Analog zum Fall der Zweifach-Überlappung wurde hier eine Segmentierung des Signals mit der zeitlichen Ausdehnung des gemeinsamen Überlappungsbereiches von TB/4 vorgenommen.

Unter der Voraussetzung der Aliaskompensation bei der Anwendung von Rechteckfenstern zu Analyse- und Synthese ergibt sich die folgende zeitliche Transformationsabfolge:

1. Sinustransformation mit Unterabtastung um den Faktor 4, Versatz um TB/8 im Zeitbereich und Versatz um eine halbe Abtastperiode bei Abtastung im Spektrum;

2. Sinustransformation mit Unterabtastung um den Faktor 4, Versatz um TB/8 im Zeitbereich und kein Versatz bei Abtastung im Spektrum;

3. Kosinustransformation mit Unterabtastung um den Faktor 4, Versatz um TB/8 im Zeitbereich und Versatz um eine halbe Abtastperiode bei Abtastung im Spektrum;

4. Kosinustransformation mit Unterabtastung um den Faktor 4, Versatz um TB/8 im Zeitbereich und kein Versatz bei Abtastung im Spektrum.

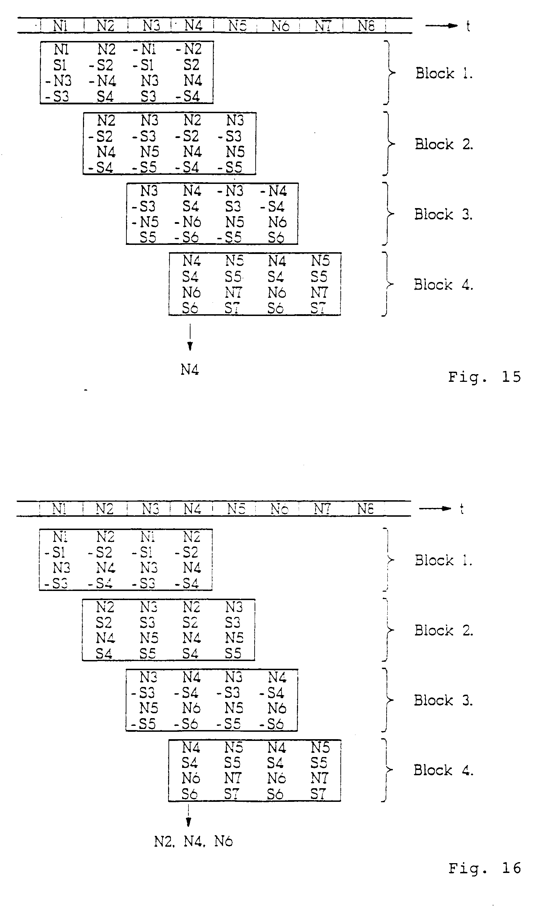

Wendet man diese zeitliche Transformationsabfolge an, so ergibt sich mit dem schon vorher verwendeten Schema die Darstellung gemäß Fig. 15.

Führt man auch hier wieder für Analyse- und Synthesefenster eine entsprechende Segmentierung durch mit den Bezeichnungen ani, asi und sni für die einzelnen Segmente in ursprünglicher zeitlicher Ausrichtung und in zeitlich invertierter Ausrichtung, so kann man auch hier die Gleichungen angeben, die die Fensterfunktionen allgemein zu erfüllen haben:

$$an1 * sn1 \; + \; an2 * sn2 \; + \; an3 * sn3 \; + \; an4 * sn4 \; = \; 1 \qquad (10)$$
$$as1 * sn1 \; + \; as2 * sn2 \; - \; as3 * sn3 \; - \; as4 * sn4 \; = \; 0 \qquad (11)$$
$$an1 * sn3 \; = \; an2 * sn4 \qquad (12)$$
$$an3 * sn1 \; = \; an4 * sn2 \qquad (13)$$
$$as1 * sn3 \; = \; as2 * sn4 \qquad (14)$$
$$as3 * sn1 \; = \; as4 * sn2 \qquad (15)$$

Nimmt man der Einfachheit halber auch in diesem Fall wieder an, daß es sich bei den Fensterfunktionen um jeweils zur Blockmitte symmetrische Funktionen handelt, so erhält man aus den Gleichungen (12) bis (15) eine Konstruktionsvorschrift, die das Analysefenster einhalten muß. Diese Vorschrift ist in einer Schreibweise angeben, in der x wieder der normierten Zeit entspricht. Sie ist in den Gleichungen (16) und (17) zusammengefaßt:

$$a(0,5 - x) * a(x) = a(0,25 + x) * a(0,25 - x) \quad (16)$$
$$a(1 - x) * a(x + 0,5) = a(0,75 + x) * a(0,75 - x) \quad (17)$$

für $0 \leq x \leq 0,25$

Bei Vorgabe eines Analysefensters, welches die Vorschriften (16) und (17) einhält, läßt sich über das Gleichungssystem (18) ein entsprechendes Synthesefenster berechnen.

$$\begin{vmatrix} 0 & 0 & an1 & -an2 \\ an1 & an2 & an3 & an4 \\ an4 & an3 & an2 & an1 \\ an3 & -an4 & 0 & 0 \end{vmatrix} * \begin{vmatrix} sn1 \\ sn2 \\ sn3 \\ sn4 \end{vmatrix} = \begin{vmatrix} 0 \\ 1 \\ 0 \\ 0 \end{vmatrix} \quad (18)$$

Setzt man nicht voraus, daß eine Aliaskompensation bei der Anwendung von Rechteckfenstern vorliegen soll, sondern daß die Aliaskomponenten nur unter Anwendung einer bestimmten Fensterfunktion, die verschieden von einem Rechteckfenster ist, sich kompensieren, so kann man von der oben angegebenen zeitlichen Transformationsabfolge abweichen und jede beliebige Transformationsreihenfolge anwenden. Durch eine andere Transformationsabfolge ändern sich gegebenenfalls die Gleichungen (10) bis (15) und damit die Konstruktionsvorschriften für Analyse- und Synthesefenster. Da jedoch die Signalkomponenten bei allen Transformationen im Synthesefensterbereich gleich sind und sich lediglich durch ihre Vorzeichen unterscheiden, bleibt die Struktur der Gleichungen (10) bis (15) mit ihren Segmenten von Analyse- und Synthesefenster erhalten und nur die Vorzeichen in diesen sechs Gleichungen ändern sich durch eine zeitlich andere Transformationsabfolge. Das bedeutet aber für die Konstruktionsvorschrift in den Gleichungen (16), (17), die das Analysefenster einhalten muß, daß es hier nur grundsätzlich zwei verschiedene Vorschriften gibt. Zum einen die in den Gleichungen (16) und (17) angegebene, zum anderen eine mit einem negativen Vorzeichen auf einer Seite des Gleichheitszeichens in beiden Gleichungen. Als Beispiel für einen solchen Fall soll die alternierende Anwendung von Sinus- und Kosinustransformation ohne Abtastversatz im Spektrum angegeben werden. Fig. 16 zeigt das Schema bei dieser Transformationsabfolge unter der Voraussetzung von Rechteckfenstern zur Analyse- und Synthese.

Die Gleichungen für das Analyse- und Synthesefenster lauten dann entsprechend:

$$an1 * sn1 + an2 * sn2 + an3 * sn3 + an4 * sn4 = 1 \quad (19)$$
$$as1 * sn1 - as2 * sn2 + as3 * sn3 - as4 * sn4 = 0 \quad (20)$$
$$an1 * sn3 = - an2 * sn4 \quad (21)$$
$$an3 * sn1 = - an4 * sn2 \quad (22)$$
$$as1 * sn3 = as2 * sn4 \quad (23)$$
$$as3 * sn1 = as4 * sn2 \quad (24)$$

und damit die Konstruktionsvorschrift für das Analysefenster:

$$a(0,5 - x) * a(x) = - a(0,25 + x) * a(0,25 - x) \quad (25)$$
$$a(1 - x) * a(x + 0,5) = - a(0,75 + x) * a(0,75 - x) \quad (26)$$

für $0 \leq x \leq 0,25$

Die im Zusammenhang mit der Vierfach-Überlappung gemachten Überlegungen lassen sich systematisch auf höhere Überlappungsgrade z.B. die Achtfach-Überlappung übertragen. Der Versatz zwischen Blockanfang und Nullpunkt des Koordinatensystem hat nun die Größe TB/16. Weiterhin können wieder nur die vier Transformationsvarianten, wie bei der Vierfach-Blocküberlappung verwendet werden. Auch hier gilt, daß die zeitliche Transformationsreihenfolge nur Einfluß auf die Vorzeichen der Signalkomponenten hat, nicht aber auf ihre zeitliche Lage im Synthesefensterbereich nach Transformation, Unterabtastung, Übertragung und inverser Transformation.

Aus analogen Überlegungen ergeben sich für die folgende Transformationsreihenfolge 14 Gleichungen, die Analyse und Synthesefenster einhalten müssen :

1. Sinustransformation mit Unterabtastung um den Faktor 4, Versatz um TB/8 im Zeitbereich und Versatz um eine halbe Abtastperiode bei Abtastung des Spektrums;

2. Sinustransformation mit Unterabtastung um den Faktor 4, Versatz um TB/8 im Zeitbereich und kein Versatz bei Abtastung des Spektrums;

3. Kosinustransformation mit Unterabtastung um den Faktor 4, Versatz um TB/8 im Zeitbereich und Versatz um eine halbe Abtastperiode bei Abtastung des Spektrums;

4. Kosinustransformation mit Unterabtastung um den Faktor 4, Versatz um TB/8 im Zeitbereich und kein Versatz bei Abtastung des Spektrums.

Hieraus lassen sich drei Gleichungen extrahieren, die als Bedingungen, die das Analysefenster zu erfüllen hat, zu verstehen sind. Die Bedingungen lauten, unter der Voraussetzung axialsymmetrischer Analyse- und Synthesefensterfunktionen:

$$a(x) * a(0,25 - x) = a(0,125 + x) * a(0,125 - x) \quad (27)$$

$$a(x) * a(0,5 - x) + a(0,125 + x) * a(0,375 - x) +$$
$$+ a(0,25 + x) * a(0,25 - x) + a(0,375 + x) * a(0,125 - x) = 0 \quad (28)$$

$$a(x) * a(0,25 + x) + a(0,25 + x) * a(0,5 - x) +$$
$$+ a(0,5 - x) * a(0,25 - x) = a(0,125 + x) * a(0,375 + x) +$$
$$+ a(0,375 + x * a(0,375 - x) + a(0,375 - x) * a(0,125 - x) \quad (29)$$

für $0 \leq x \leq 0,125$

Ist eine Fensterfunktion a(x) gefunden, die die obigen drei Bedingungen erfüllt, kann über das Gleichungssystem (30) das Synthesefenster berechnet werden.

$$
\begin{vmatrix}
0 & 0 & 0 & 0 & 0 & 0 & an1 & -an2 \\
0 & 0 & 0 & 0 & an1 & an2 & an3 & an4 \\
0 & 0 & an1 & -an2 & an3 & -an4 & an5 & -an6 \\
an1 & an2 & an3 & an4 & an5 & an6 & an7 & an8 \\
an8 & an7 & -an6 & -an5 & an4 & an3 & -an2 & -an1 \\
an3 & -an4 & an5 & -an6 & an7 & -an8 & 0 & 0 \\
an5 & an6 & an7 & an8 & 0 & 0 & 0 & 0 \\
an7 & -an8 & 0 & 0 & 0 & 0 & 0 & 0
\end{vmatrix}
*
\begin{vmatrix}
sn1 \\ sn2 \\ sn3 \\ sn4 \\ sn5 \\ sn6 \\ sn7 \\ sn8
\end{vmatrix}
=
\begin{vmatrix}
0 \\ 0 \\ 0 \\ 1 \\ 0 \\ 0 \\ 0 \\ 0
\end{vmatrix}
$$

$$\text{Gleichung (30)}$$

Die Lösungen für die Berechnung von Analyse- und Synthesefenster der unterschiedlichen Blocküberlappungen, die in den vorhergehenden Abschnitten angegeben wurden, zeigen einen systematischen Aufbau. Dies ist deutlich an den Matrizengleichungen (18) und zu erkennen. Die Bedingungen, die die Analysefensterfunktion erfüllen muß, bringen mit steigender Überlappung größere Einschränkungen für ein sinnvolles Fensterdesign.

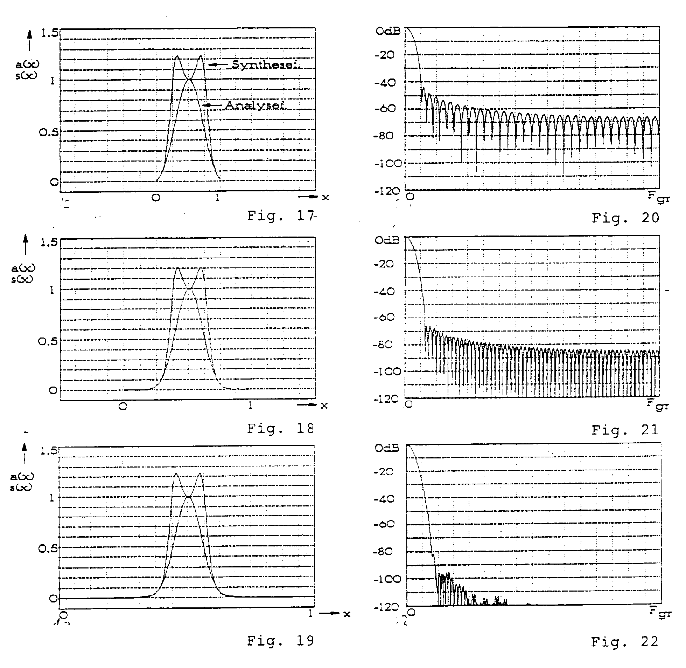

Zum einheitlichen Vergleich der verschiedenen Blocküberlappungen wurde als Grundlage ein Kaiserfenster gewählt. Das Kaiserfenster wurde jeweils so modifiziert, daß es den jeweiligen Bedingungen der überlappenden Transformation genügt. Dies geschah immer durch eine den Fensterbedingungen entsprechende Erweiterung bei Vorgabe der Kaiser-Fensterfunktion in einem Teilbereich des Fensters. Im Falle der Zweifach-Überlappung sind die Freiheitsgrade für das Analysefenster noch so groß, daß hier ein vollständiges Kaiserfenster gewählt kann (Fig. 17). Im Falle der Vierfach-Überlappung muß aufgrund der eingeschränkten Freiheitsgrade, wie sie Gleichungen (16) und (17) beschreiben, das Kaiserfenster modifiziert werden. Bei der Fensterkonstruktion in Fig. 18 wurde ein Kaiserfenster zwischen den normierten Zeitwerten x=1/8 und x=7/8 vorgegeben und die restlichen Fensterteile über die Gleichungen (16) und (17) angefügt. Da bei steigender Überlappung die Einschränkungen für das Analysefenster immer größer werden, kann im Falle der Achtfach-Überlappung (Fig. 19) das Kaiserfenster nur noch zwischen x=1/4 und x=3/4 vorgegeben werden. Die restlichen Fensterteile müssen dann mittels Gleichungen (27) bis (29) errechnet werden.

Die Figuren 17 bis 22 zeigen den zeitlichen Verlauf der Fensterfunktion und den Betrag des Fourierspektrums. Die Fenster wurden so ausgelegt, daß die effektive Fensterbreite, also die Fensterbreite in der nahezu die gesamte Energie des Fensters liegt, bei allen Überlappungsgrößen gleich ist. Diese Fensterbreite entspricht der Fensterbreite der Zweifach-Überlappung. Die nominale Fensterbreite verdoppelt sich für jede Verdoppelung der Überlappung, wie die Figuren 17 bis 19 zeigen.

Durch die Wahl des Kaiserfensters als Analysefensterfunktion erhalten die entsprechenden Synthesefenster Überhöhungen größer Eins. Dieses Verhalten muß bei einer Optimierung der Fenster auf Grundlage der jeweiligen Applikation berücksichtigt werden, da gegebenenfalls Störanteile, die bei der Codierung des Spektrums entstehen, hierdurch geringfügig angehoben werden können. Vergleicht man alle drei Zeitfunktionen der Analysefenster miteinander, so ist deutlich der fast identische Verlauf im Bereich der effektiven Fensterbreite zu erkennen. Hieraus resultiert im Spektrum eine identische Breite des "Main Slope" des Betragsverlaufes der Fouriertransformierten der Analysefensterfunktion. In den Figuren 20 bis 22 ist deutlich der Einfluß, den die Mehrfach-Überlappung für das gewählte Beispiel hat, zu erkennen. Durch die jeweilige Verdoppelung der Überlappung und die damit verbundene Verlängerung des ursprünglichen Kaiserfensters ergeben sich immer kleinere Fensterrandwerte. Durch diesen Effekt ergeben sich im Spektrum immer größere Dämpfungen, in die der spektrale Verlauf nach dem "Main Slope" übergeht. Diese Fensterfamilie ist nur als Beispiel für die Wirkungsweise der Mehrfach-Überlappung zu sehen. Das Fensterdesign muß an den jeweiligen Anwendungsfall angepaßt werden. Dies bedeutet zum Beispiel für ein Analysefenster für die Achtfach-Überlappung, daß durch ein entsprechendes Design der "Main Slope" schmaler wird, wenn keine so große Dämpfung nach dem "Main Slope" benötigt wird.

## Patentansprüche

1. Verfahren zur Übertragung eines Signals, bei dem das analoge Signal in ein digitales Signal umgewandelt, digital übertragen und wieder in ein analoges Signal umgesetzt wird (Fig. 1), und wobei das Signal durch einander überlappende Zeitfenster in zeitlich aufeinanderfolgende Blöcke aufgeteilt wird, die je in eine das Kurzzeit-Spektrum darstellende Signalfolge umgewandelt werden, gekennzeichnet durch,

   a) Fensterung des Signals und Bildung zeitlicher Blöcke der Blocklänge TB mit Überlappungsbereichen der relativen Größen von N-1/N mit $N=2^n$ für ganzzahlige n;
   b) Unterziehung der im Zeitbereich um TB/2∗N versetzten einzelnen Blöcke jeweils einer Sinus-oder Kosinus-Transformation;
   c) Unterabtastung durch Auswahl jedes N-ten Wertes nach dem Schema: C1: O, N, 2N, 3N..... oder C2: N/2, 3N/2, 5N/2. .../ wodurch sich vier Kombinationen bezügliche Transformation und unter Abtastungsform ergeben:
   - Transformations- und Unterabtastungsform
   - K1: Kosinustransformation + Auswahlschema C1
   - K2: Kosinustransformation + Auswahlschema C2
   - K3: Sinustransformation und Auswahlschema C1
   - K4: Sinustransformation und Auswahlschema C2;
   d) Anwendung einer der Kombinationen K1.... K4 in beliebiger Permutation auf jeden der an der Überlappung beteiligten Blöcke, wodurch sich vier Wertegruppen mit Einträgen für die Überlappungsbereiche der Blöcke ergeben, die sich lediglich durch ihr Vorzeichen unterscheiden;
   e) Auswahl der anzuwendenden Kombinationen K1...K4 nach dem Kriterium, daß nach inverser Transformation und Summation der Komponenten in den Signalabschnitten der an der Überlappung beteiligten Blöcke alle Signalanteile kompensiert werden, die nicht aus dem gleichen Segment des Originalsignal stammen;
   f) Codierung, Übertratung und Decodierung;
   g) Unterziehung der einzelnem Blöcke jeweils einer inversen Sinus- oder Kosinustransformation;
   h) Segmentierung des zeitkontinuierlichen Signals in aufeinanderfolgende Signalabschnitte Ni für i = 1, 2, 3, ..., welche je nach verwendeter Kombination K1 ... K4 neben den Komponenten Ni ... die diesen Komponenten entsprechenden zeitlich gespiegelten Komponenten Si ... enthalten sind;
   i) Summation der Komponenten Ni ... und Si ... in den Signalabschnitten Ni der an der Überlappung beteiligten Blöcke.

2. Verfahren nach Anspruch 1, dadurch gekennzeichnet, daß:
   a. die Blöcke vor der Transformation mit Analysefenstern und nach der Transformation mit Synthesefenstern bewertet werden, die Segmente gleicher Länge TB/N wie die Signalabschnitte bilden;
   b. die Bewertung erfolgt durch Multiplikation der Signalkomponenten Ni ... bzw. der diesen Komponenten entsprechenden zeitlich gespiegelten Komponenten Si ... mit den Komponenten des Analysefensters ani ... bzw. den diesen Komponenten entsprechenden zeitlich gespiegelten Komponenten asi ... und den Komponenten des Synthesefensters sni ... ;
   c. die bei der Bewertung verwendeten Analyse- und Synthesefensterfunktionen müssen in den Überlappungsbereichen folgende Bedingungen erfüllen:
      I. die Summe der in den Signalabschnitten eines Blockes überlagerten zeitlich regulären Nutzsignal-Komponenten des Analysefensters und Synthesefensters beträgt 1; ,
      II. die Summe der in den Signalabschnitten eines Blockes überlagerten zeitlich regulären Alias-Komponenten des Analysefensters und Synthesefensters beträgt 0;

3. Verfahren nach Anspruch 2, dadurch gekennzeichnet, daß bei Fensterfunktionen symmetrisch zur Blockmitte und Zweifach-Überlappung die Synthesefensterfunktion aus einer vorgegebenen Analysefensterfunktion gemäß folgender Gleichung ermittelt wird:

$$s(x) \; = \; \frac{a(x)}{a^2(x) \; + \; a^2(x + 0,5)}$$

für $0 \leqq x \leqq 0,5$

wobei

s(x) die Synthesefensterfunktion ist,

a(x) die Analysefensterfunktion ist,

x eine normierte Zeit darstellt, die am Blockanfang den Wert 0 und am Ende den Wert 1 besitzt.

4.  Verfahren nach Anspruch 2, dadurch gekennzeichnet, daß bei Fensterfunktionen symmetrisch zur Blockmitte und Vierfach-Überlappung zunächst eine Analysefensterfunktion ermittelt wird, die folgende Gleichungen erfüllt:

$$a(0,5 - x) * a(x) \; = \; a(0,25 + x) * a(0,25 - x)$$
$$a(1 - x) * a(x + 0,5) \; = \; a(0,75 + x) * a(0,75 - x)$$

für $0 \leqq x \leqq 0,25$

wobei a(x) die Analysefunktion ist, und dann die Synthesefensterfunktion aus der zuvor bestimmten Analysefensterfunktion gemäß folgenden Gleichungssystem ermittelt wird:

$$
\begin{vmatrix}
0 & 0 & an1 & -an2 \\
an1 & an2 & an3 & an4 \\
an4 & an3 & an2 & an1 \\
an3 & -an4 & 0 & 0
\end{vmatrix}
*
\begin{vmatrix}
sn1 \\ sn2 \\ sn3 \\ sn4
\end{vmatrix}
=
\begin{vmatrix}
0 \\ 1 \\ 0 \\ 0
\end{vmatrix}
$$

wobei

sni die Komponenten der Synthesefensterfunktion sind,

ani die Komponenten der Analysefensterfunktion sind,

x eine normierte Zeit darstellt, die am Blockanfang den Wert 0 und am Ende den Wert 1 besitzt.

5.  Verfahren nach Anspruch 2, dadurch gekennzeichnet, daß bei Fensterfunktionen symmmetrisch zur Blockmitte und Achtfach-Überlappung zunächst eine Analysefensterfunktion ermittelt wird, die folgende Gleichungen erfüllt:

$$a(x) * a(0,25 - x) \; = \; a(0,125 + x) * a(0,125 - x)$$
$$a(x) * a(0,5 - x) \; + \; a(0,125 + x) * a(0,375 - x) \; +$$
$$+ \; a(0,25 + x) * a(0,25 - x) \; + \; a(0,375 + x) * a(0,125 - x) = 0$$
$$a(x) * a(0,25 + x) \; + \; a(0,25 + x) * a(0,5 - x) \; +$$
$$+ \; a(0,5 - x) * a(0,25 - x) \; = \; a(0,125 + x) * a(0,375 + x) \; +$$
$$+ \; a(0,375 + x * a(0,375 - x) \; + \; a(0,375 - x) * a(0,125 - x)$$

für $0 \leqq x \leqq 0,125$

wobei a(x) die Analysefunktion ist, und dann die Synthesefensterfunktion aus der zuvor bestimmten Analysefensterfunktion gemäß folgende m Gleichungssystem ermittelt wird:

$$
\begin{vmatrix}
0 & 0 & 0 & 0 & 0 & 0 & an1 & -an2 \\
0 & 0 & 0 & 0 & an1 & an2 & an3 & an4 \\
0 & 0 & an1 & -an2 & an3 & -an4 & an5 & -an6 \\
an1 & an2 & an3 & an4 & an5 & an6 & an7 & an8 \\
an8 & an7 & -an6 & -an5 & an4 & an3 & -an2 & -an1 \\
an3 & -an4 & an5 & -an6 & an7 & -an8 & 0 & 0 \\
an5 & an6 & an7 & an8 & 0 & 0 & 0 & 0 \\
an7 & -an8 & 0 & 0 & 0 & 0 & 0 & 0
\end{vmatrix}
*
\begin{vmatrix}
sn1 \\ sn2 \\ sn3 \\ sn4 \\ sn5 \\ sn6 \\ sn7 \\ sn8
\end{vmatrix}
=
\begin{vmatrix}
0 \\ 0 \\ 0 \\ 1 \\ 0 \\ 0 \\ 0 \\ 0
\end{vmatrix}
$$

wobei

sni die Komponenten der Synthesefensterfunktion sind,

ani die Komponenten der Analysefensterfunktion sind,

x eine normierte Zeit darstellt, die am Blockanfang den Wert 0 und am Ende den Wert 1 besitzt.

## Claims

1. A method for transmitting a signal, in which the analog signal is converted into a digital signal, transmitted digitally and converted back into an analog signal (Fig.1), and in which the signal is divided by means of mutually-overlapping time windows into blocks following each other in time, which are each converted into a signal sequence representing the short-term spectrum, characterised by,

    a) assigning the signals to windows and forming time blocks with block length TB with overlapping regions with relative sizes of N-1/N with $N = 2^n$ for integral values of n;

    b) subjecting each of the individual blocks in the time period displaced by TB/2∗N to a sine- or cosine-transformation;

    c) subsampling by selection of each Nth value according to the schedule: C1:0,N,2N,3N..... or C2: N/2, 3N/2, 5N/2..... whereby there arise four combinations with reference to transformation and form of subsampling:

    - transformation and subsampling form
    - K1: Cosine transformation + selection schedule C1
    - K2: Cosine transformation + selection schedule C2
    - K3: Sine transformation and selection schedule C1
    - K4: Sine transformation and select scheme C2;

    d) applying one of the combinations K1.....K4 in any permutation to any of the blocks involved in the overlapping, whereby there arise four value groups with items for the overlapping regions of the blocks, which differ merely by their sign;

    e) selecting the combinations K1...K4 to be applied according to the criterion that after inverse transformation and summation of the components in the signal portions of the blocks involved in the overlapping all those signal components are compensated which do not originate from the same segment of the original signal;

    f) coding, transmission and decoding;

    g) subjecting each of the individual blocks to an inverse sine- or cosine-transformation;

    h) segmenting the time - continuous signal into succcessive signal portions Ni for i = 1,2,3,..., which according to the applied combination K1...K4 contains in addition to the components Ni... the components Si... corresponding to these components reflected in time;

    i) summing the components Ni... and Si... in the signal portions Ni of the blocks involved in the overlapping.

2. A method according to claim 1, characterised in that:

    a) before the transformation the blocks are weighted by analysis windows and after the transformation by synthesis windows, which form segments of the same length TB/N as the signal portions;

    b) the weighting occurs by multiplication of the signal components Ni... or the components Si... corresponding to these components reflected in time by the components of the analysis window ani... or the components asi... corresponding to these components reflected in time and the components of the synthesis window sni...;

    c) the analysis and synthesis window functions used in the weighting must fulfil the following conditions in the overlapping regions:

    I) the sum of the regular useful signal components of the analysis window and synthesis window superimposed in the signal portions of a block amounts to 1;

    II) the sum of the regular Alias components of the analysis window and synthesis window superimposed in the signal portions of a block amounts to O.

3. A method according to claim 2, characterised in that in the case of window functions symmetrical to the centre of the block and double overlapping the synthesis window function is determined from a predetermined analysis window function according to the following equation:

$$s(x) \ = \ \frac{a(x)}{a^2(x) \ + \ a^2(x+0,5)}$$

for $0 \leqq x \leqq 0,5$

in which s(x) is the synthesis window function,

    a(x) is the analysis window function,

    x represents a normalised time, having the value 0 at the beginning of a block and the value 1 at the end.

4. A method according to claim 2, characterised in that in the case of window functions which are symmetrical to the centre of the block and fourfold overlapping there is first determined an analysis window function, which fulfils the following equations:

$$a(0,5 - x) * a(x) = a(0,25 + x) * a(0,25 - x)$$
$$a(1 - x) * a(x + 0,5) = a(0,75 + x) * a(0,75 - x)$$

for $0 \leq x \leq 0,25$

in which a(x) is the analysis function, and then the synthesis window function is determined from the previously determined analysis window function according to the following equation system:

$$\begin{vmatrix} 0 & 0 & an1 & -an2 \\ an1 & an2 & an3 & an4 \\ an4 & an3 & an2 & an1 \\ an3 & -an4 & 0 & 0 \end{vmatrix} * \begin{vmatrix} sn1 \\ sn2 \\ sn3 \\ sn4 \end{vmatrix} = \begin{vmatrix} 0 \\ 1 \\ 0 \\ 0 \end{vmatrix}$$

wherein

sni are the components of the synthesis window function,

ani are the components of the analysis window function,

x represents a normalised time, having the value 0 at the beginning of a block and the value 1 at the end.

5. A method according to claim 2, characterised in that in the case of window functions symmetrical to the centre of the block and eightfold overlapping there is first determined an analysis window function, which fulfils the following equations:

$$a(x) * a(0,25 - x) = a(0,125 + x) * a(0,125 - x)$$
$$a(x) * a(0,5 - x) + a(0,125 + x) * a(0,375 - x) +$$
$$+ a(0,25 + x) * (0,25 - x) + a(0,375 + x) * a(0,125 - x) = 0$$
$$a(x) * a(0,25 - x) + a(0,25 + x) * a(0,5 - x) +$$
$$+ a(0,5 - x) * a(0,25 - x) = a(0,125 + x) * a(0,375 + x) +$$
$$+ a(0,375 + x * a(0,375 - x) + a(0,375 - x) * a(0,125 - x)$$

for $0 \leq x \leq 0,125$

in which a(x) is the analysis function, and then the synthesis window function is determined from the previously determined analysis window function according to the following equation system:

$$\begin{vmatrix} 0 & 0 & 0 & 0 & 0 & 0 & an1 & -an2 \\ 0 & 0 & 0 & 0 & an1 & an2 & an3 & an4 \\ 0 & 0 & an1 & -an2 & an3 & -an4 & an5 & -an6 \\ an1 & an2 & an3 & an4 & an5 & an6 & an7 & an8 \\ an8 & an7 & -an6 & -an5 & an4 & an3 & -an2 & -an1 \\ an3 & -an4 & an5 & -an6 & an7 & -an8 & 0 & 0 \\ an5 & an6 & an7 & an8 & 0 & 0 & 0 & 0 \\ an7 & -an8 & 0 & 0 & 0 & 0 & 0 & 0 \end{vmatrix} * \begin{vmatrix} sn1 \\ sn2 \\ sn3 \\ sn4 \\ sn5 \\ sn6 \\ sn7 \\ sn8 \end{vmatrix} = \begin{vmatrix} 0 \\ 0 \\ 0 \\ 1 \\ 0 \\ 0 \\ 0 \\ 0 \end{vmatrix}$$

in which

sni are the components of the synthesis window function,

ani are the components of the analysis window function,

x represents a normalised time, having the value 0 at the beginning of a block and the value 1 at the end.

## Revendications

1. Procédé pour la transmission d'un signal dans lequel le signal analogique est transformé en un signal numérique, est transmis numériquement et est retransformé en un signal analogique (figure 1), le signal étant réparti par des fenêtres de temps qui se chevauchent en blocs qui se succèdent dans le temps qui sont transformés chacun en une séquence de signal qui représente le spectre de courte durée, caractérisé par

a) Mise en fenêtre du signal et formation de blocs temporels de la longueur de bloc TB avec des zones de chevauchement des grandeurs relatives de N-1/N avec $N=2^n$ pour n entier;

b) Soumission des différents blocs décalés dans le temps de TB/2*N respectivement à une transformation à sinus ou à cosinus;

c) Sous-balayage par sélection d'une N-ième valeur selon le schéma : C1 : 0, N, 2N, 3N..... ou C2: N/2, 3N/2, 5N/2..../, ce par quoi on obtient quatre combinaisons pour ce qui est de la transformation et de la forme de sous-balayage:

- Forme de transformation et de sous-balayage
- K1 : Transformation à cosinus + schéma de sélection C1
- K2 : Transformation à cosinus + schéma de sélection C2
- K3: Transformation à sinus et schéma de sélection C1
- K4 : Transformation à sinus et schéma de sélection C2 ;

d) Application d'une des combinaisons K7... K4 en permutation quelconque à chacun des blocs participant au chevauchement, ce par quoi on obtient quatre groupes de valeurs avec des inscriptions pour les zones de chevauchement des blocs qui se distinguent uniquement par leur signe ;

e) Sélection des combinaisons à appliquer K1...K4 selon le critère qu'après transformation inverse et addition des composantes dans les fractions de signal des blocs participant au chevauchement toutes les fractions qui ne proviennent pas du même segment du signal d'origine sont compensées,

f) Codage, transmission et décodage;

g) Soumission des différents blocs respectivement à une transformation inverse à sinus ou à cosinus ;

h) Segmentation du signal constant dans le temps en sections de signal successives Ni pour i = 1, 2, 3, ... qui contiennent, selon la combinaison K1...K4 utilisée, en plus des composantes Ni ... les composantes Si ... réfléchies dans le temps qui correspondent à ces composantes ;

i) Addition des composantes Ni ... et Si ... dans les fractions de signal Ni des blocs qui participent au chevauchement.

2. Procédé selon la revendication 1, caractérisé en ce que :

a. les blocs sont évalués avant la transformation avec des fenêtres d'analyse et après la transformation avec des fenêtres de synthèse qui forment des segments de même longueur TB/N que les fractions de signal ;

b. l'évaluation s'effectue par multiplication des composantes de signal Ni... ou des composantes Si... réfléchies dans le temps qui correspondent à ces composantes par les composantes de la fenêtre d'analyse ani ... ou par les composantes asi... réfléchies dans le temps qui correspondent à ces composantes et les composantes de la fenêtre de synthèse sni ...;

c. les fonctions de fenêtre d'analyse et de synthèse utilisées pour l'évaluation doivent remplir les conditions suivantes dans les zones de chevauchement :

I. la somme des composantes de signal utile régulières dans le temps de la fenêtre d'analyse et de la fenêtre de synthèse qui sont superposées dans les fractions de signal d'un bloc est 1 ;

II. la somme des composantes fictives régulières dans le temps de la fenêtre d'analyse et de la fenêtre de synthèse qui sont superposées dans les fractions de signal d'un bloc est 0.

3. Procédé selon la revendication 2, caractérisé en ce que pour des fonctions de fenêtre symétriques par rapport au milieu du bloc et un chevauchement double la fonction de fenêtre de synthèse est déterminée à partir d'une fonction de fenêtre d'analyse donnée selon l'équation suivante :

$$s(x) \; = \; \frac{a(x)}{a^2(x) \; + \; a^2(x+0,5)}$$

pour $0 \leqq x \leqq 0,5$

s(x) étant la fonction de la fenêtre de synthèse,

a(x) étant la fonction de la fenêtre d'analyse,

x représentant un temps normalisé qui possède au début du bloc la valeur 0 et à la fin la valeur 1.

4. Procédé selon la revendication 2, caractérisé en ce que pour des fonctions de fenêtre symétriques par rapport au milieu du bloc et un chevauchement quadruple il est tout d'abord déterminé une fonction de fenêtre d'analyse qui remplit les équations suivantes :

$$a(0,5 - x) * a(x) \; = \; a(0,25 + x) * a(0,25 - x)$$

$$a(1 - x) * a(x + 0,5) = a(0,75 + x) * a(0,75 - x)$$

pour $0 \leq x \leq 0,25$

a(x) étant la fonction d'analyse et la fonction de fenêtre de synthèse étant ensuite déterminée à partir de la fonction de fenêtre déterminée préalablement selon le système d'équations suivant :

$$
\begin{vmatrix}
0 & 0 & an1 & -an2 \\
an1 & an2 & an3 & an4 \\
an4 & an3 & an2 & an1 \\
an3 & -an4 & 0 & 0
\end{vmatrix}
*
\begin{vmatrix}
sn1 \\
sn2 \\
sn3 \\
sn4
\end{vmatrix}
=
\begin{vmatrix}
0 \\
1 \\
0 \\
0
\end{vmatrix}
$$

sni étant les composantes de la fonction de fenêtre de synthèse, ani les composantes de la fonction de fenêtre d'analyse, x représentant un temps normalisé qui possède au début du bloc la valeur 0 et à la fin la valeur 1.

5.  Procédé selon la revendication 2, caractérisé en ce que pour des fonctions de fenêtre symétriques par rapport au milieu du bloc et un chevauchement octuple il est tout d'abord déterminé une fonction de fenêtre d'analyse qui remplit les équations suivantes :

$$a(x) * a(0,25 - x) = a(0,125 - x) * a(0,125 - x)$$
$$a(x) * a(0,5 - x) + a(0,125 + x) * a(0,375 - x) +$$
$$+ a(0,25 + x) * a(0,25 - x) + a(0,375 + x) * a(0,125 - x) = 0$$
$$a(x) * a(0,25 + x) + a(0,25 + x) * a(0,5 - x) +$$
$$+ a(0,5 - x) * a(0,25 - x) = a(0,125 + x) * a(0,375 + x) +$$
$$+ a(0,375 + x * a(0,375 - x) + a(0,375 - x) * a(0,125 - x)$$

pour $0 \leq x \leq 0,125$

a(x) étant la fonction d'analyse et la fonction de fenêtre de synthèse étant ensuite déterminée à partir de la fonction de fenêtre d'analyse déterminée préalablement selon le système d'équations suivant :

$$
\begin{vmatrix}
0 & 0 & 0 & 0 & 0 & 0 & an1 & -an2 \\
0 & 0 & 0 & 0 & an1 & an2 & an3 & an4 \\
0 & 0 & an1 & -an2 & an3 & -an4 & an5 & -an6 \\
an1 & an2 & an3 & an4 & an5 & an6 & an7 & an8 \\
an8 & an7 & -an6 & -an5 & an4 & an3 & -an2 & -an1 \\
an3 & -an4 & an5 & -an6 & an7 & -an8 & 0 & 0 \\
an5 & an6 & an7 & an8 & 0 & 0 & 0 & 0 \\
an7 & -an8 & 0 & 0 & 0 & 0 & 0 & 0
\end{vmatrix}
*
\begin{vmatrix}
sn1 \\
sn2 \\
sn3 \\
sn4 \\
sn5 \\
sn6 \\
sn7 \\
sn8
\end{vmatrix}
=
\begin{vmatrix}
0 \\
0 \\
0 \\
1 \\
0 \\
0 \\
0 \\
0
\end{vmatrix}
$$

sni étant les composantes de la fonction de fenêtre de synthèse, ani les composantes de la fonction de fenêtre d'analyse, x représentant un temps normalisé qui possède au début du bloc la valeur 0 et à la fin la valeur 1.

A/D—Wandlung — 1

Selektion 1024 Abtastwerte — 2

50% überlappende Blöcke — 3

Bewertung mit Analysefenster — 4

Transformation — 5

Pseudobetrags- und Phasenbildung — 6

Codierung, Übertragung, Decodierung — 7

inverse Transformation — 8

Bewertung mit Synthesefenster — 9

Überlappende Addition — 10

Kontinuierliche Abtastwerte — 11

D/A—Wandlung — 12

FIG.1

| N1 | N2 | N3 | N4 | N5 | N5 | N6 | → t |

$$\frac{T_B}{2}$$

Fig. 2

Block 1 : | N1 | N2 |    Block 2 : | N2 | N3 |    . . . u.s.w.

Fig. 3

| S2 | S1 | N1 | N2 |    t
$-T_B$    O    $T_B$

gerader Signalanteil

| -S2 | -S1 | N1 | N2 |    t
$-T_B$    O    $T_B$

ungerader Signalanteil

Fig. 4

| S2 | S1 | N1 | N2 | S2 | S1 | N1 | N2 | S2 | S1 | N1 | N2 |    t
$-2T_B$    $-T_B$    $T_B$    $2T_B$

Fig. 5

| S2 | S1 |
| S2 | S1 |    | N1 | N2 |
| N1 | N2 |
| S2 | S1 |    | N1 | N2 |    ← ursprünglicher Block
| S2 | S1 |    | N1 | N2 |
| S2 | S1 |    | N1 | N2 |

$$\frac{T_B}{2}$$    $T_B$

Fig. 6

| S2 | S1 |    | N1 | N2 |
| S2 | S1 |    | N1 | N2 |
| N1 | N2 |    ← ursprünglicher Block
| S2 | S1 |
| S2 | S1 |    | N1 | N2 |
| S2 | S1 |    | N1 | N2 |

$$\frac{T_B}{4}$$    $T_B$

Fig. 7

17

kontinuierliches Signal

Transformationsblöcke

Versatz $T_B/4$     Versatz $T_B/2$

Fig. 8

Fig. 9

Kosinustransformation
ohne Abtastversatz im Spektrum

Sinustransformation
ohne Abtastversatz im Spektrum

Kosinustransformation mit
Abtastversatz im Spektrum

Sinustransformation mit
Abtastversatz im Spektrum

Fig. 10

Originalsignal :

Signalkomponenten im
jeweiligen Blockbereich
nach TUUR-Zyklus

Block 1. Kosinustr.

Block 2. Sinustr.

Block 3. Kosinustr.

Block 4. Sinustr.

Signal nach überlappender
Summation im Empänger :

Fig. 11

18

| an1 | an2 |

Analysefenster

| sn1 | sn2 |

Synthesefenster

Fig. 12

Komponenten des → | sn1 | sn2 |
Synthesefensters

| an1 | an2 |
| as1 | as2 |

} Block 1

| sn1 | sn2 |

Komponenten des ⟶ | an1 | an2 |
Analysefensters | -as1 | -as2 |

} Block 2

| sn1 | sn2 |

| an1 | an2 |
| as1 | as2 |

} Block 3

| sn1 | sn2 |

| an1 | an2 |
| -as1 | -as2 |

} Block 4

Fig. 13

| N1 | N2 | N1 | N2 |
| S1 | S2 | S1 | S2 |
| N3 | N4 | N3 | N4 |
| S3 | S4 | S3 | S4 |

Kosinustransformation
ohne Versatz im Spektrum

| N1 | N2 | N1 | N2 |
| -S1 | -S2 | -S1 | -S2 |
| N3 | N4 | N3 | N4 |
| -S3 | -S4 | -S3 | -S4 |

Sinustransformation
ohne Versatz im Spektrum

| N1 | N2 | -N1 | -N2 |
| -S1 | S2 | S1 | -S2 |
| -N3 | -N4 | N3 | N4 |
| S3 | -S4 | -S3 | S4 |

Kosinustransformation
mit Versatz im Spektrum

| N1 | N2 | -N1 | -N2 |
| S1 | -S2 | -S1 | S2 |
| -N3 | -N4 | N3 | N4 |
| -S3 | S4 | S3 | -S4 |

Sinustransformation
mit Versatz im Spektrum

Fig. 14

| | N1 | N2 | N3 | N4 | N5 | N6 | N7 | N8 | → t |
|---|---|---|---|---|---|---|---|---|---|

| | | | | |
|---|---|---|---|---|
| N1 | N2 | -N1 | -N2 | |
| S1 | -S2 | -S1 | S2 | Block 1. |
| -N3 | -N4 | N3 | N4 | |
| -S3 | S4 | S3 | -S4 | |

| | | | | |
|---|---|---|---|---|
| N2 | N3 | N2 | N3 | |
| -S2 | -S3 | -S2 | -S3 | Block 2. |
| N4 | N5 | N4 | N5 | |
| -S4 | -S5 | -S4 | -S5 | |

| | | | | |
|---|---|---|---|---|
| N3 | N4 | -N3 | -N4 | |
| -S3 | S4 | S3 | -S4 | Block 3. |
| -N5 | -N6 | N5 | N6 | |
| S5 | -S6 | -S5 | S6 | |

| | | | | |
|---|---|---|---|---|
| N4 | N5 | N4 | N5 | |
| S4 | S5 | S4 | S5 | Block 4. |
| N6 | N7 | N6 | N7 | |
| S6 | S7 | S6 | S7 | |

↓

N4

Fig. 15

| | N1 | N2 | N3 | N4 | N5 | N6 | N7 | N8 | → t |
|---|---|---|---|---|---|---|---|---|---|

| | | | | |
|---|---|---|---|---|
| N1 | N2 | N1 | N2 | |
| -S1 | -S2 | -S1 | -S2 | Block 1. |
| N3 | N4 | N3 | N4 | |
| -S3 | -S4 | -S3 | -S4 | |

| | | | | |
|---|---|---|---|---|
| N2 | N3 | N2 | N3 | |
| S2 | S3 | S2 | S3 | Block 2. |
| N4 | N5 | N4 | N5 | |
| S4 | S5 | S4 | S5 | |

| | | | | |
|---|---|---|---|---|
| N3 | N4 | N3 | N4 | |
| -S3 | -S4 | -S3 | -S4 | Block 3. |
| N5 | N6 | N5 | N6 | |
| -S5 | -S6 | -S5 | -S6 | |

| | | | | |
|---|---|---|---|---|
| N4 | N5 | N4 | N5 | |
| S4 | S5 | S4 | S5 | Block 4. |
| N6 | N7 | N6 | N7 | |
| S6 | S7 | S6 | S7 | |

↓

N2, N4, N6

Fig. 16

Fig. 17

Fig. 18

Fig. 19

Fig. 20

Fig. 21

Fig. 22